Europäisches Patentamt

European Patent Office

Office européen des brevets

(19)

(11) Veröffentlichungsnummer: **0 257 297**
**B1**

(12) **EUROPÄISCHE PATENTSCHRIFT**

(45) Veröffentlichungstag der Patentschrift: **16.01.91**

(21) Anmeldenummer: **87110498.0**

(22) Anmeldetag: **20.07.87**

(51) Int. Cl.⁵: **G 02 B 6/42**, G 02 B 6/44

(54) **Optische Verbindung und damit hergestellter Optokoppler.**

(30) Priorität: **08.08.86 DE 3626826**

(43) Veröffentlichungstag der Anmeldung:
**02.03.88 Patentblatt 88/09**

(45) Bekanntmachung des Hinweises auf die
Patenterteilung:
**16.01.91 Patentblatt 91/03**

(84) Benannte Vertragsstaaten:
**DE FR GB**

(56) Entgegenhaltungen:
**FR-A-2 118 113**
**US-A-3 663 822**

(73) Patentinhaber: **Siemens Aktiengesellschaft**
**Wittelsbacherplatz 2**
**D-8000 München 2 (DE)**

(72) Erfinder: **Hirschmann, Günther, Dipl.-Ing. FH**
**Fauststrasse 70**
**D-8000 München 82 (DE)**
Erfinder: **Waitl, Günter, Ing. grad.**
**Praschweg 3**
**D-8400 Regensburg (DE)**
Erfinder: **Schellhorn, Franz**
**Dr.-Johann-Maier-Strasse 14**
**D-8400 Regensburg (DE)**

Courier Press, Leamington Spa, England.

**Beschreibung**

Die Erfindung betrifft eine optische Verbindung nach dem Oberbegriff des Anspruchs 1 und einen damit hergestellten Optokoppler.

Den Vorteilen der optischen Signalübertragung in der Nachrichtentechnik und im "Messen-Steuern-Regeln"-Bereich gegenüber der drahtgebundenen Übertragung standen lange Zeit hohe Kosten und aufwendige Montage entgegen. Vorteile der optischen Signalübertragung bestehen beispielsweise in der galvanischen Trennung und in der Sicherheit vor induktiver Störung.

Die für eine optische Nachrichtenübertragung oder auch im Bereich "Messen-Steuern-Regeln" verwendeten Lichtwellenleiter-Bauelemente wie beispielsweise Lichtleiter-Sender, Lichtleiter-Empfänger und Lichtwellenleiter, insbesondere Kunststoff-Lichtwellenleiter, sollen einfach und zuverlässig miteinander gekoppelt werden können, sollen einfach und zuverlässig miteinander befestigt werden können und sollen eine einfache und zuverlässige optische Verbindung ergeben.

Für optische Signalübertragungssysteme mit Lichtwellenleitern, beispielsweise mit preiswerten Kunststoff-Lichtleitern als Übertragungsmedien, gibt es bisher für die Verbindung zwischen einem optoelektronischen Bauelement und der optischen Faser nur aufwendige Lösungen mit Befestigungselementen, die teuer sind und viel Platz benötigen. Diese bekannten Lösungen mit Befestigungselementen erfordern auch immer eine problematische und kostenintensive Faserkonfektionierung.

Der vorliegenden Erfindung liegt die Aufgabe zugrunde, eine optische Verbindung und einen damit hergestellten Optokoppler anzugeben, bei denen eine zuverlässige, einfache und platzsparende Verbindung zwischen optoelektronischem Bauelement und der Faser möglich ist.

Diese Aufgabe wird erfindungsgemäß durch eine optische Verbindung nach dem Anspruch 1 und durch einen Optokoppler nach dem Anspruch 2 gelöst.

Die Erfindung löst das technische Problem der zuverlässigen mechanischen und optischen Verbindung zwischen optoelektronischem Bauelement und der Faser durch die spezielle Geometrie des optoelektronischen Lichtleiter-Bauelements in Kombination mit einem Schrumpfschlauch, der das optoelektronische Bauelement und die Faser dauerhaft miteinander verbindet. Die spezielle Geometrie des optoelektronischen Bauelements besteht darin, daß im Bauteil des optoelektronischen Bauelements ein Hohlzylinder und eine Linse integriert sind. Zur Verkopplung von Lichtsender und/oder Lichtempfänger wird ein Ende des Lichtleiters zusammen mit dem Schutzmantel des Lichtleiters in den Hohlzylinder an der jeweiligen Oberseite des jeweiligen optoelektronischen Bauelements gesteckt.

Ein Schrumpfschlauch ist ein Plastikschlauch, der sich bei Erwärmung dauerhaft zusammenzieht.

Die optische und mechanische Verbindung zwischen dem jeweiligen optoelektronischen Bauelement und dem Lichtleiter ist nur durch Zerstörung des Schrumpfschlauches lösbar. Eine solche Verbindung ist damit zuverlässiger als eine Verbindung mit Steckern.

Bei Verwendung eines lichtundurchlässigen Schrumpfschlauches wird das Signal-Stör-Verhältnis besser, da sich dann Umgebungslicht und Signallicht nicht gegenseitig beeinflussen.

Eine solche Beeinflussung des Signallichts durch das Umgebungslicht ist ansonsten insbesondere bei Übertragung mit sichtbarem Licht bei einer Bauform des optoelektronischen Bauelements mit integriertem Hohlzylinder und mit integrierter Linse nur schwer zu vermeiden.

Durch eine erfindungsgemäße Befestigungsmethode werden auch Umwelteinflüsse, wie beispielsweise Staub und Feuchtigkeit, von der Verbindungsstelle ferngehalten.

Die Einkoppelverluste zwischen dem Lichtleiter und dem Lichtleiter-Bauelement werden durch die besondere Kombination von integrierter Linse und integriertem Hohlzylinder des optoelektronischen Lichtleiter-Bauelements auf der einen Seite und andererseits durch den Schrumpfvorgang des Schrumpfschlauches minimiert. Die optische Einkoppelleistung ist nur dann optimal, wenn der Lichtleiter an die integrierte Linse des optoelektronischen Lichtleiter-Bauelements anstößt. Durch den Schrumpfvorgang wird der Lichtleiter im integrierten Hohlzylinder an die integrierte Linse des optoelektronischen Lichtleiter-Bauelements dauerhaft gezogen und stößt dort an.

Ein Abmanteln des Lichtleiters ohne Beschädigung des lichtdurchlässigen Lichtleiterkerns ist problematisch und kostenintensiv. Zur Herstellung einer erfindungsgemäßen optischen Verbindung ist ein Abmanteln des Lichtleiters nicht erforderlich.

Mit einer erfindungsgemäßen optischen Verbindung läßt sich ein Höchstspannungs-Optokoppler für optische Signalübertragung mit variabel einstellbarer Isolationsfestigkeit von beispielsweise größer als 15kV realisieren. Des weiteren tritt kein störendes Übersprechen zwischen Lichtsender und Lichtempfänger auf, weil die kapazitive Kopplung vernachlässigbar ist.

Für eine Vielzahl von Anwendungen bietet sich eine einfache und preiswerte Lösung für einfache optische Signalübertragung an. Für Bitraten bis in den Mbit/s-Bereich und Übertragungsstrecken im Meterbereich können Lichtleiterbauelemente, die von LED-Gehäusebauformen sowohl für Sender als auch für Empfänger abgeleitet sind, zusammen mit Lichtleitern, insbesondere zusammen mit Plastikfasern, ein entsprechendes Übertragungssystem ergeben.

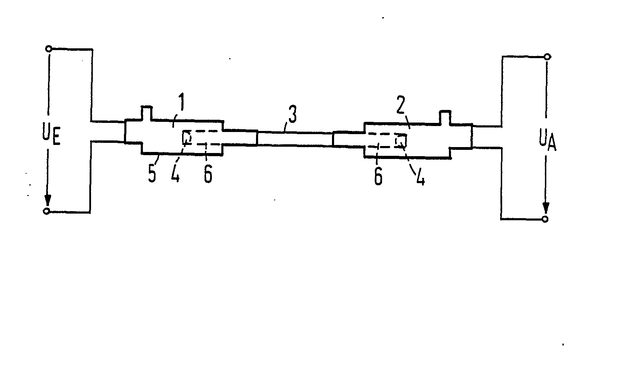

Die Erfindung wird anhand der Zeichnung näher erläutert.

Die Figur zeigt schematisch einen Lichtwellenleiter-Optokoppler.

Lichtleiter-Bauelemente 1, 2 sind für eine einfache optische Signalübertragung geeignet. Diese Lichtleiter-Bauelemente 1, 2 werden aus den bekannten LED-Gehäuseformen abgeleitet und haben stirnseitig beispielsweise ein 2,3 mm großes Loch 6, in das ein Lichtleiter 3, z.B. eine Plastikfaser, gesteckt werden kann. Die Lichtsender 1 bestehen aus Infrarot-Dioden oder aus rot oder grünleuchtenden lichtemittierenden Dioden (LED). Die Lichtempfänger 2 bestehen aus Photodioden oder aus Phototransistoren. Lichtsender 1 und Lichtempfänger 2 können beliebig kombiniert werden.

Neben der Hauptanwendung, nämlich der optischen Datenübertragung, können die Einzelelemente des Optokopplers auch zu einem Optokoppler mit wenigen Zentimetern bis ca. 20m Koppellänge bei Verwendung einer Plastikfaser für den Lichtleiter 3 zusammengesetzt werden. Infolge der freizügigen Kombinationen der verschiedenen Einzelelemente des Optokopplers können so sehr kurze Schaltzeiten, hohe Isolationsspannungen und vernachlässigbare Koppelkapazitäten realisiert werden.

Optokoppler dienen zur Pegelanpassung, zur Signalverarbeitung und vor allem zum Trennen von elektrischen Potentialen.

In der modernen Elektronik ist der Optokoppler ein wichtiges Bauelement.

Mit einem Optokoppler nach der Figur sind Übertragungslängen von 20m realisierbar. Die kleine mit einem solchen Optokoppler übertragene Leistung erlaubt den Betrieb in explosionsgefährdeten Bereichen, da keine Zündgefahr besteht. Der Optokoppler ermöglicht eine störsichere Übertragung, auch wenn starke veränderliche elektromagnetische Störfelder einwirken. Infolge vernachlässigbarer kapazitiver Kopplung zwischen Lichtsender 1 und Lichtempfänger 2 ist kein störendes Übersprechen möglich. Die Isolationsspannung kann bei einem Optokoppler nach der Figur beliebig hoch werden. Bei hoher Schaltfrequenz zeichnet sich der Lichtleiter-Optokoppler durch geringe Schaltzeiten aus.

Schaltzeiten im Nanosekundenbereich sind möglich.

Bei Betrieb der mit einem Loch 6 versehenen Dioden 1, 2 ist darauf zu achten, daß das Plastikfaserkabel 3 gut in den jeweiligen Lochdioden 1, 2 sitzt, damit bei der Lichteinkopplung keine zusätzlichen Verluste entstehen. Auch sollte kein Fremdlicht auf die Lichtleiter-Bauelemente 1, 2 scheinen, damit eine möglichst hohe Systemstabilität erreicht wird. Diese beiden Forderungen werden erfüllt, wenn die Lochdioden 1, 2 und das jeweilige Ende des Plastikfaserkabels 3 in einem Schrumpfschlauch 5 befestigt sind.

Damit an den Enden der Plastikfaser 3 geringe Streuverluste entstehen, soll die Oberfläche der Enden behandelt werden.

Als gute Lösung hat sich dabei das Naßschleifen mit einem feinen Schmirgelpapaier (z.B. Körnung 600) erwiesen.

Für einen Optokoppler geeignete Plastikfasern 3 haben beispielsweise einen Innendurchmesser von 1 mm und einen Außendurchmesser von 2,3 mm.

Die spezielle Geometrie der optoelektronischen Bauelemente 1, 2 besteht darin, daß im jeweiligen Bauteil der optoelektronischen Bauelemente 1, 2 je ein Hohlzylinder 6 und eine Linse 4 integriert sind. Zur Verkopplung von Lichtsender 1 und/ oder Lichtempfänger 2 wird ein Ende des Lichtleiters 3 zusammen mit dem Schutzmantel des Lichtleiters 3 in den Hohlzylinder 6 an der jeweiligen Oberseite des jeweiligen optoelektronischen Bauelements 1, 2 gesteckt. Durch den Schrumpfvorgang des Schrumpfschlauches 5 wird der Lichtleiter 3 im integrierten Hohlzylinder 6 an die integrierte Linse 4 des optoelektronischen Lichtleiter Bauelements 1, 2 dauerhaft gezogen und stößt dort an.

Ein Optokoppler nach der Figur ermöglicht eine hohe Zuverlässigkeit, eine hohe Lebensdauer, geringes Rauschen, geringe Koppelkapazität, eine gute Linearität und kurze Schaltzeiten.

Ein Optokoppler nach der Erfindung eignet sich für Fahrzeuginstallation, für Elektromedizin, für Leistungselektronik, für Robotersteuerung, für Sensorik und für "Messen-Steuern- Regeln"-Aufgaben.

**Patentansprüche**

1. Optische Verbindung mit einem Lichtsender (1) oder einem Lichtempfänger (2), bei der ein Lichtwellenleiter (3) zur Lichtübertragung angekoppelt ist dadurch gekennzeichnet, daß der Lichtsender (1) oder der Lichtempfänger (2) mit einer Linse (4) und einem Hohlzylinder (6) integriert ist, daß ein Ende des Lichtwellenleiters (3) in den Hohlzylinder (6) gesteckt ist, und daß der Lichtsender (1) bzw. der Lichtempfänger (2) mit Hilfe eines Schrumpfschlauches (5) mit dem Lichtwellenleiter (3) verbunden ist, so daß das anzukoppelnde Ende des Lichtwellenleiters (3) an die mit dem Lichtsender (1) bzw. dem Lichtempfänger (2) integrierte Linse (4) anstößt.

2. Optokoppler mit einem Lichtsender (1) und einem Lichtempfänger (2), bei dem ein Lichtwellenleiter (3) zur Lichtübertragung zwischen Lichtsender (1) und Lichtempfänger (2) verwendet ist, dadurch gekennzeichnet, daß der Lichtsender (1) und der Lichtempfänger (2) in ihren Bauteilen jeweils eine Linse (4) und einen Hohlzylinder (6) integriert haben, daß jeweils ein Ende des Lichtwellenleiters (3) in einem dieser beiden Hohlzylinder (6) gesteckt ist, und daß Lichtsender (1) bzw. Lichtempfänger (2) jeweils mit Hilfe eines Schrumpfschlauches (5) mit dem Lichtwellenleiter (3) verbunden sind, so daß jeweils ein Ende des Lichtwellenleiters (3) an eine der in den Bauteilen des Lichtsenders (1) und des Lichtempfängers (2) integrierten Linsen (4) anstößt.

3. Optische Verbindung nach Anspruch 1 oder 2, gekennzeichnet durch einen Kunststoff-Lichtleiter als Lichtwellenleiter (3).

4. Optische Verbindung nach einem der Ansprüche 1 bis 3, gekennzeichnet durch einen lichtundurchlässigen Schrumpfschlauch (5).

5. Optische Verbindung nach einem der Ansprüche 1 bis 4, gekennzeichnet durch variabel eingestellte Isolationsfestigkeit.

6. Verwendung einer optischen Verbindung nach einem der Ansprüche 1 bis 5 zur optischen Signalübertragung.

**Revendications**

1. Liaison optique comportant une source de lumière (1) ou un récepteur de lumière (2) et dans laquelle un guide d'ondes optiques (3) est accouplé pour réaliser la transmission de la lumière, caractérisé par le fait que la source de lumière (1) ou le récepteur de lumière (2) est intégré avec une lentille (4) et un cylindre creux (6), qu'une extrémité au guide d'ondes optiques (3) est enfichée dans le cylindre creux (6) et que la source de lumière (1) ou le récepteur de lumière (2) est relié, au moyen d'un tuyau rétractable (5) au guide d'ondes optiques (3) de sorte que l'extrémité devant être accouplée du guide d'ondes optiques (3) est en aboutement contre la lentille (4) intégrée avec la source de lumière (1) et le récepteur de lumière (2).

2. Optocoupleur comportant une source de lumière (1) et un récepteur de lumière (2) et dans lequel un guide d'ondes optiques (3) est utilisé pour transmettre la lumière entre la source de lumière (1) et le récepteur de lumière (2), caractérisé par le fait que la source de lumière (1) et le récepteur de lumière (2) comportent respectivement une lentille (4) et un cylindre creux (6) intégrés dans leurs composants, qu'une extrémité respective du guide d'ondes optiques (3) est enfichée dans l'un de ces deux cylindres creux (6), que la source de lumière (1) et le récepteur de lumière (2) sont reliés respectivement à l'aide d'un tuyau rétractable (5) au guide d'ondes optiques (3) de sorte qu'une extrémité respective du guide d'ondes optiques (3) est en aboutement contre l'une des lentilles (4) intégrées dans les composants de la source de lumière (1) et du récepteur de lumière (2).

3. Liaison optique selon la revendication 1 ou 2, caractérisée par un guide de lumière en matière plastique en tant que guide d'ondes optiques (3).

4. Liaison optique selon l'une des revendications 1 à 3, caractérisée par un tuyau rétractable (5) opaque à la lumière.

5. Liaison optique selon l'une des revendications 1 à 4, caractérisée par une résistance diélectrique réglable de façon variable.

6. Application d'une liaison optique selon l'une des revendications 1 à 5 destinée à une transmission optique des signaux.

**Claims**

1. Optical connection with an opto-transmitter (1) or an opto-receiver (2), in which an optical waveguide (3) is connected for light transmission, characterized in that the opto-transmitter (1) or the opto-receiver (2) is integrated with a lens (4) and a hollow cylinder (6), in that an end of the optical waveguide (3) is inserted into the hollowcylinder (6), and in that the opto-transmitter (1) or the opto-receiver (2) is connected with the aid of a heat-shrinkable tube (5) to the optical waveguide (3) such that the end of the optical waveguide (3) to be connected abuts the lens (4) integrated with the optotransmitter (1) or the opto-receiver (2).

2. Optocoupler with an opto-transmitter (1) and an opto-receiver (2), in which an optical waveguide (3) is employed for light transmission between opto-transmitter (1) and opto-receiver (2), characterized in that the opto-transmitter (1) and the opto-receiver (2) have integrated in their constructional parts in each case a lens (4) and a hollow cylinder (6), in that in each case one end of the optical waveguide (3) is inserted into one of these two hollow cylinders (6), and in that optotransmitter (1) or opto-receiver (2) are connected in each case with the aid of a heat-shrinkable tube (5) to the optical waveguide (3), so that in each case one end of the optical waveguide (3) abuts one of the lenses (4) integrated in the constructional parts of the optotransmitter (1) and of the opto-receiver (2).

3. Optical connection according to Claim 1 or 2, characterized by a plastic optical fibre as optical waveguide (3).

4. Optical connection according to one of Claims 1 to 3, characterized by an opaque heat-shrinkable tube (5).

5. Optical connection according to one of Claims 1 to 4, characterized by variably adjusted insulating strength.

6. Use of an optical connection according to one of Claims 1 to 5 for optical signal transmission.